# EUROPEAN PATENT APPLICATION

(11) **EP 4 836 522 A1**
(43) Date of publication of application: **04.11.2026**
(21) Application number: 25744440.6
(22) Date of filing: 07.01.2025
(51) Int. Cl.: H04W 36/08

(54) **COMMUNICATION METHOD AND APPARATUS**

(30) Priority: 26.01.2024 CN 202410121427
(71) Applicant: Huawei Technologies Co., Ltd., Shenzhen, Guangdong 518129 (CN)
(72) Inventor: LI, Lele, Shenzhen, Guangdong 518129 (CN); LI, Yexing, Shenzhen, Guangdong 518129 (CN); WU, Yedan, Shenzhen, Guangdong 518129 (CN); YU, Yijun, Shenzhen, Guangdong 518129 (CN); LIN, Yi, Shenzhen, Guangdong 518129 (CN)
(74) Representative: Isarpatent
(86) International application number: PCT/CN2025/070988
(87) International publication number: WO 2025/156996

(57) **Abstract**

A communication method and apparatus are provided, to enable proper selection of a target access device and improve service quality of a terminal device. The communication method includes: A first communication apparatus determines a target access device of a terminal device based on first information, where the first information includes movement path information of the terminal device and/or quality of experience of at least one candidate access device. The first communication apparatus sends information about the target access device to a source access device of the terminal device.

## Description

### CROSS-REFERENCE TO RELATED APPLICATIONS

This application claims priority to Chinese Patent Application No. 202410121427.0, filed with the China National Intellectual Property Administration on January 26, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

A networking architecture of optical networks is specified in the 5th generation fixed networks (the 5th generation fixed networks, F5G) defined by the European Telecommunications Standards Institute (European telecommunications standards institute, ETSI). Currently, an optical network includes four domains: a customer premises network (customer premises network, CPN), an access network (access network, AN), an aggregation network (aggregation network, AggN), and a core network (core network, CN). Each domain has its own controller (controller), and the controller of any domain may be controlled with end-to-end orchestration and management (end-to-end orchestrator, e2e-o). On the user access side, access devices such as an optical network unit (optical network unit, ONU) may be configured to provide network access for users, and may be configured to construct networking for a wireless network communication technology (Wi-Fi).

In existing optical network technologies, when a terminal device performs handover, access device selection is suboptimal, resulting in degraded communication performance.

### SUMMARY

This application provides a communication method and apparatus, to select a target access device properly and improve service quality of a terminal device.

According to a first aspect, a communication method is provided. The communication method may be applied to a first communication apparatus. The first communication apparatus may be a first management device or an orchestration device. The first communication apparatus may alternatively be a component (for example, a processor, a chip, or a chip system) in the first management device or a component in the orchestration device, or the first communication apparatus may be a logical module or software that can implement all or some network element functions. The communication method includes: The first communication apparatus determines a target access device of a terminal device based on first information, where the first information includes movement path information of the terminal device and/or quality of experience of at least one candidate access device. The first communication apparatus sends information about the target access device to a source access device of the terminal device.

Based on the method according to the first aspect, the first communication apparatus may properly select the target access device based on the movement path information of the terminal device and/or the quality of experience of the at least one candidate access device, to improve accuracy in selecting the target access device and improve service quality of the terminal device.

In a possible implementation, the first communication apparatus may further send an identifier of the terminal device to the orchestration device, and receive the movement path information from the orchestration device.

Based on this implementation, the first communication apparatus may request, based on the identifier of the terminal device, the movement path information of the terminal device from the orchestration device, and the orchestration device determines and provides the movement path information of the terminal device.

In a possible implementation, the method is applied to the first management device. The first management device may further receive first signal strength information from the source access device, where the first signal strength information indicates downlink signal strength of a signal that is of one or more access devices and received by the terminal device. The first management device may further send the first signal strength information to the orchestration device.

Based on this implementation, the first management device may obtain the first signal strength information of the terminal device from the source access device, and send the first signal strength information to the orchestration device. The first signal strength information may be used to determine the movement path information of the terminal device.

In a possible implementation, the first communication apparatus may further receive a first request message from the orchestration device, where the first request message is used for requesting the first signal strength information, and the first request message includes the identifier of the terminal device. The first communication apparatus may send the first signal strength information to the orchestration device based on the first request message.

Based on this implementation, the first communication apparatus may provide the first signal strength information for the orchestration device based on a request of the orchestration device. Therefore, the orchestration device may determine whether the first communication apparatus needs to provide the first signal strength information for the orchestration device.

In a possible implementation, the first communication apparatus may further determine the identifier of the at least one candidate access device based on the identifier of the terminal device, send the identifier of the at least one candidate access device to the orchestration device, and receive the quality of experience of the at least one candidate access device from the orchestration device.

Based on this implementation, the first communication apparatus may determine the identifier of the at least one candidate access device based on the identifier of the terminal device, and send the identifier of the at least one candidate access device to the orchestration device to request the movement path information of the terminal device, so that the orchestration device determines and provides the quality of experience of the at least one candidate access device.

In a possible implementation, the method is applied to the first management device, the at least one candidate access device includes a first candidate access device, the first candidate access device is managed by the first management device, and the first management device may further send second information to the orchestration device, where the second information includes at least one of throughput, a delay, or a handover delay of the first candidate access device, and the second information is used to determine the quality of experience of the at least one candidate access device.

Based on this implementation, when the at least one candidate access device is managed by the first management device, the first management device may send the second information to the orchestration device, that is, send at least one of throughput, a delay, or a handover delay of the at least one candidate access device, so that the orchestration device determines the quality of experience of the at least one candidate access device.

In a possible implementation, the first management device may receive a second request message from the orchestration device, where the second request message is used for requesting the second information, and the second request message includes the identifier of the terminal device and/or the identifier of the at least one candidate access device. The first management device may send the second information to the orchestration device based on the second request message.

Based on this implementation, the first communication apparatus may provide the second information to the orchestration device based on a request of the orchestration device. Therefore, the orchestration device may determine whether the first communication apparatus needs to provide the second information to the orchestration device.

In a possible implementation, the method is applied to the first management device, and the at least one candidate access device includes an access device managed by a second management device.

Based on this implementation, the orchestration device in any one of the foregoing implementations may manage the first management device and the second management device, and the at least one candidate access device may include the access device managed by the second management device. Therefore, in a cross-domain handover scenario, the orchestration device may participate in determining the target access device. The cross-domain handover scenario means that candidate access devices are included in different domains. One domain may be understood to include only an access device that is managed by one management device.

In a possible implementation, the first communication apparatus may determine the movement path information based on an identifier of the terminal device; and/or the first communication apparatus may determine an identifier of the at least one candidate access device based on the identifier of the terminal device, and determine the quality of experience of the at least one candidate access device based on the identifier of the candidate access device.

Based on this implementation, the movement path information may be determined by the first communication apparatus. For example, the movement path information may be determined by the first management device, or the movement path information may be determined by the orchestration device.

In a possible implementation, the method is applied to a first management device, and the at least one candidate access device is managed by the first management device.

Based on this implementation, in a non-cross-domain handover scenario, the movement path information may be determined by the first management device, and an orchestration device may not need to participate in determining the target access device.

In a possible implementation, the method is applied to an orchestration device. The orchestration device may send a third request message to the first management device, where the third request message is used for requesting second signal strength information, the second signal strength information indicates downlink signal strength of a signal that is of one or more access devices and received by the terminal device, and the third request message includes the identifier of the terminal device. The orchestration device may further receive the second signal strength information, and determine the movement path information based on the second signal strength information.

Based on this implementation, if the movement path information of the terminal device is determined by the orchestration device, the orchestration device may send the third request message to the first management device, to request the second signal strength information. The second signal strength information may be reported by the terminal device to the first management device via the source access device.

In a possible implementation, the method is applied to an orchestration device, the at least one candidate access device includes a first candidate access device, the first candidate access device is managed by a first management device, and the orchestration device may send a fourth request message to the first management device, where the fourth request message is used for requesting third information, the third information includes at least one of throughput, a delay, or a handover delay of the first candidate access device, and the second information is used to determine quality of experience of the at least one candidate access device. The orchestration device may further receive the third information, and determine the quality of experience of the at least one candidate access device based on the third information.

Based on this implementation, if the quality of experience of the at least one candidate access device is determined by the orchestration device, the orchestration device may request the third information from the first management device, and the third information may indicate at least one performance parameter of throughput, a delay, or a handover delay of the at least one candidate access device. The orchestration device may further determine the quality of experience of the at least one candidate access device based on the third information.

In addition, the orchestration device may send, to the second management device (or more management devices such as an AN controller), a request message similar to the fourth request message, which may be used for requesting to receive a performance parameter (for example, fourth information, indicating a performance parameter of at least one candidate access device managed by the second management device or another management device) that is of the at least one candidate access device and similar to the third information. In this case, the orchestration device may determine the path information of the terminal device based on the third information and the fourth information.

In a possible implementation, the quality of experience of the at least one candidate access device includes location information and at least one of throughput, a delay, or a handover delay that is of the at least one candidate access device and corresponds to the location information.

Based on this implementation, the quality of experience may indicate at least one of throughput, a delay, or a handover delay when the at least one candidate access device is at one or more locations. When the target access device is determined, the target access device can be properly selected with reference to at least one of the throughput, the delay, or the handover delay when the at least one candidate access device is at the one or more locations.

In a possible implementation, the first communication apparatus may further obtain required quality of experience of the terminal device. The first communication apparatus may determine, based on the required quality of experience of the terminal device, and the movement path information and/or the quality of experience of the at least one candidate access device, the target access device from the at least one candidate access device. The required quality of experience of the terminal device includes, for example, at least one of throughput, a delay, or a handover delay that is required by the terminal device.

Based on this implementation, the target access device may be selected with reference to the required quality of experience of the terminal device, to select the target access device more properly, so as to determine a target access device that meets a quality of experience requirement.

In a possible implementation, the required quality of experience of the terminal device is determined based on quality of experience of one or more services of the terminal device, to properly determine the required quality of experience of the terminal device. For example, if there are a plurality of services of the terminal device, the required quality of experience of the terminal device may be quality of experience of a service with best quality of experience in the plurality of services of the terminal device. Therefore, a requirement of the service with the best quality of experience may be preferably met.

According to a second aspect, a communication method is provided. The communication method may be applied to an orchestration device or a component (for example, a processor, a chip, or a chip system) in the orchestration device. Alternatively, the orchestration device may be a logical module or software that can implement all or some network element functions. The communication method includes: The orchestration device receives an identifier of a terminal device from a first management device, determines movement path information of the terminal device based on the identifier of the terminal device, and sends the movement path information to the first management device, where the movement path information is used to determine a target access device of the terminal device.

In a possible implementation, the orchestration device may further determine downlink signal strength of the terminal device based on the identifier of the terminal device, and determine the movement path information based on the downlink signal strength of the terminal device.

In a possible implementation, the orchestration device may further receive first signal strength information from the first management device, where the first signal strength information indicates downlink signal strength of a signal that is of one or more access devices and received by the terminal device, and the downlink signal strength of the terminal device includes the first signal strength information.

In a possible implementation, the orchestration device may further send a first request message to the first management device, where the first request message is used for requesting the first signal strength information, and the first request message includes the identifier of the terminal device.

In a possible implementation, at least one candidate access device includes an access device managed by a second management device.

For technical effects brought by the second aspect, refer to the descriptions of the beneficial effects of the corresponding solutions in the first aspect. Details are not described herein again.

According to a third aspect, a communication method is provided. The communication method may be applied to an orchestration device or a component (for example, a processor, a chip, or a chip system) in the orchestration device. Alternatively, the orchestration device may be a logical module or software that can implement all or some network element functions. The communication method includes: The orchestration device may further receive an identifier of at least one candidate access device from a first management device, determine quality of experience of the at least one candidate access device based on the identifier of the at least one candidate access device, and send the quality of experience of the at least one candidate access device to the first management device, where the quality of experience of the at least one candidate access device is used to determine a target access device of a terminal device.

In a possible implementation, the at least one candidate access device includes a first candidate access device, and the first candidate access device is managed by the first management device. The orchestration device may further receive second information from the first management device, where the second information includes at least one of throughput, a delay, or a handover delay of the first candidate access device. The orchestration device may further determine the quality of experience of the at least one candidate access device based on the second information.

In a possible implementation, the orchestration device may further send a second request message to the first management device, where the second request message is used for requesting the second information, and the second request message includes an identifier of the terminal device and/or the identifier of the at least one candidate access device.

In a possible implementation, the at least one candidate access device includes an access device managed by a second management device.

In a possible implementation, the quality of experience of the at least one candidate access device includes location information and at least one of throughput, a delay, or a handover delay that is of the at least one candidate access device and corresponds to the location information.

For technical effects brought by the third aspect, refer to the descriptions of the beneficial effects of the corresponding solutions in the first aspect. Details are not described herein again.

According to a fourth aspect, a communication apparatus is provided. The apparatus may implement the method according to any one of the first aspect to the third aspect and the possible implementations of the first aspect to the third aspect. The apparatus has a function of the first communication apparatus or the second communication apparatus. The apparatus is, for example, a first management device, an orchestration device, a source access device, a functional module in a first management device, a functional module in an orchestration device, or a functional module in a source access device.

In an optional implementation, the apparatus may include modules that are in one-to-one correspondence with the methods/operations/steps/actions according to any one of the first aspect to the third aspect and the possible implementations of the first aspect to the third aspect. Such a module may be implemented by a hardware circuit, software, or a combination of a hardware circuit and software. In an optional implementation, the apparatus includes a processing unit (sometimes also referred to as a processing module) and a communication unit (sometimes also referred to as a transceiver module, a communication module, an interface unit, or the like). A transceiver unit can implement a sending function and a receiving function. When implementing the sending function, the transceiver unit may be referred to as a sending unit (sometimes also referred to as a sending module). When implementing the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a collective term of these functional modules.

For example, when the apparatus is configured to perform the method described in any one of the first aspect and the second aspect, the apparatus may include a communication unit and a processing unit.

According to a fifth aspect, an embodiment of this application further provides a communication apparatus, including a processor, configured to execute a computer program (or computer-executable instructions) stored in a memory. When the computer program (or the computer-executable instructions) is (or are) executed, the apparatus is caused to perform the method according to any one of the first aspect to the third aspect and the possible implementations of the first aspect to the third aspect. The apparatus is, for example, configured to implement a first management device, an orchestration device, or a source access device.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, for sending or receiving of data and/or a signal. For example, the communication interface may be a transceiver, a circuit, a bus, a module, or a communication interface of another type.

According to a sixth aspect, a computer-readable storage medium is provided, and the computer-readable storage medium is configured to store a computer program or instructions. When the computer program or the instructions are run, the method according to any one of the first aspect to the third aspect and the possible implementations of the first aspect to the third aspect is implemented.

According to a seventh aspect, a computer program product including instructions is provided. When the computer program product runs on a computer, the method according to any one of the first aspect to the third aspect and the possible implementations of the first aspect to the third aspect is implemented.

According to an eighth aspect, an embodiment of this application further provides a communication apparatus, configured to perform the method according to any one of the first aspect to the third aspect and the possible implementations of the first aspect to the third aspect.

According to a ninth aspect, a chip system is provided. The chip system includes a logic circuit (which may alternatively be understood as that the chip system includes a processor, and the processor may include the logic circuit, and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, is configured to receive a message. The output interface is configured to implement a sending function, that is, is configured to send a message. The logic circuit may be configured to perform an operation other than the sending and receiving functions in the method according to any one of the first aspect to the third aspect and the possible implementations of the first aspect to the third aspect. The logic circuit may be further configured to: transmit a message to the input/output interface, or receive a message from another communication apparatus through the input/output interface. The chip system may be configured to implement the method according to any one of the first aspect to the third aspect and the possible implementations of the first aspect to the third aspect. The chip system may include a chip, or may include a chip and another discrete component.

Optionally, the chip system may further include a memory, and the memory may be configured to store instructions. The logic circuit may invoke the instructions stored in the memory, to implement a corresponding function.

According to a tenth aspect, a communication method is provided. The communication method may include the method that is implemented by the first communication apparatus according to any one of the first aspect and the possible implementations of the first aspect, and the method that is implemented by the second communication apparatus according to any one of the second aspect and the possible implementations of the second aspect.

According to an eleventh aspect, a communication system is provided. The communication system may include a first management device and an orchestration device. The first management device may be configured to implement the method that is implemented by the first management device according to any one of the first aspect and the possible implementations of the first aspect. The orchestration device may be configured to implement the method shown in any one of the second aspect and the possible implementations of the second aspect, and/or configured to implement the method shown in any one of the third aspect and the possible implementations of the third aspect. Optionally, the communication system may further include a second communication apparatus, and the second communication apparatus may be configured to receive information about a target AP from a first communication apparatus.

According to a twelfth aspect, a communication system is provided. The communication system includes a first communication apparatus and a second communication apparatus. The first communication apparatus may be configured to implement the method that is implemented by the first communication apparatus according to any one of the first aspect and the possible implementations of the first aspect, and the second communication apparatus may be configured to receive information about a target AP from the first communication apparatus.

For technical effects brought by the third aspect to the twelfth aspect, refer to the descriptions of the beneficial effects of the corresponding solutions in the first aspect and the second aspect. Details are not described herein again.

### BRIEF DESCRIPTION OF DRAWINGS

FIG. 1 is a diagram of a networking architecture of an optical network;
FIG. 2 is a diagram of a communication method according to an embodiment of this application;
FIG. 3 is a diagram of a structure of a module for implementing a communication method according to an embodiment of this application;
FIG. 4 is a diagram of another communication method according to an embodiment of this application;
FIG. 5 is a diagram of another communication method according to an embodiment of this application;
FIG. 6 is a diagram of another communication method according to an embodiment of this application;
FIG. 7 is a diagram of a structure of a communication apparatus according to an embodiment of this application; and
FIG. 8 is a diagram of a structure of another communication apparatus according to an embodiment of this application.

### DESCRIPTION OF EMBODIMENTS

To make the objectives, technical solutions, and advantages of embodiments of this application clearer, the following further describes embodiments of this application in detail with reference to the accompanying drawings. It should be understood that "an embodiment", "an implementation", or "an example" mentioned in this application means that particular features, structures, or characteristics related to embodiments are included in at least one embodiment of this application. Therefore, "in an embodiment", "in an implementation", or "in an example" appearing throughout the specification does not necessarily refer to a same embodiment. In addition, these particular features, structures, or characteristics may be combined in one or more embodiments in any appropriate manner. It should be understood that in various embodiments of this application, sequence numbers of the foregoing processes do not mean an execution sequence, and the execution sequence of the processes should be determined based on functions and internal logic of the processes, and should not constitute any limitation on the implementation processes of embodiments of this application.

Before description of this application, some terms in embodiments of this application are first briefly described, to facilitate understanding for a person skilled in the art.

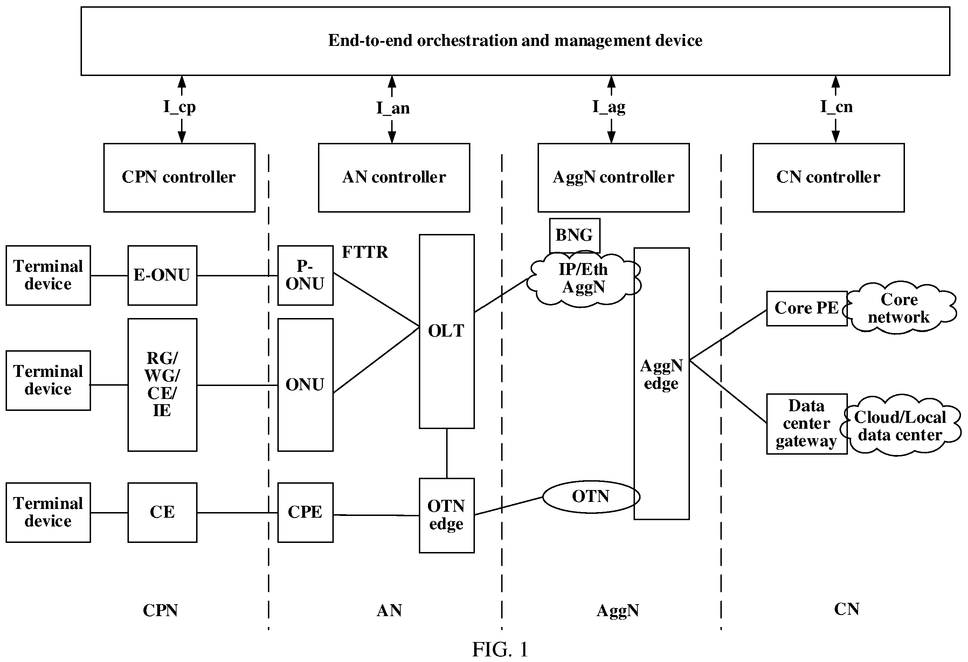

FIG. 1 is a diagram of a possible networking architecture of an optical network. Currently, the optical network includes four domains: a CPN, an AN, an AggN, and a CN. The foregoing domains may correspond to different devices or entities, and these devices or entities may be configured to implement optical networking.

The CPN may be configured to connect a terminal device to a network. For example, as shown in FIG. 1, the terminal device may access a network via a device like an edge optical network unit (edge ONU, E-ONU), a residential gateway (residential gateway, RG), a wide area network (wide area network, WAN) gateway (WAN gateway, WG), a customer edge (customer edge, CE), or an industrial edge (industrial edge, IE) in the CPN.

The AN may be a set of access connections for which optical transmission is used or partially used between a service node or a remote module and user equipment and that are performed through a same network-side interface. As shown in FIG. 1, the AN may include an entity or a device like an ONU and/or a customer premises equipment (customer premises equipment, CPE), and may be configured to provide network access for users, to construct networking for a wireless network communication technology (Wi-Fi). For example, in a fiber-to-the-remote (fiber-to-the-remote, FTTR) technology, the ONU includes a primary optical network unit (primary ONU, P-ONU), and the P-ONU is connected to the E-ONU.

As shown in FIG. 1, in an implementation of the AN, the AN may include an optical line terminal (optical line terminal, OLT), an optical distribution network (optical distribution network, ODN), and the ONU. The ODN mainly includes passive devices such as an optical fiber and an optical splitter, and therefore is not shown in FIG. 1. For example, the ODN may be configured to connect the OLT and the ONU. On a network side, the OLT provides, for an optical access network, an interface to the service node or the remote module, and communicates with a user-side ONU via the ODN. The ODN is used for optical transmission between the OLT and the ONU, and is mainly used to allocate optical signal power. The ONU provides a remote user-side interface for the optical access network.

In another implementation of the AN, the AN may include an optical transport network (optical transport network, OTN) edge device configured to process a private line service.

The AggN is also referred to as an optical transport network, which has a network aggregation function and can be used for long-distance transmission. The AggN is connected to the core network via an AggN edge device. As shown in FIG. 1, in an example of the AggN, the AggN includes a broadband network gateway (broadband network gateway, BNG), configured to connect the OLT and the AggN edge device, to implement an optical transport network (IP/Eth AggN) according to an internet protocol (internet protocol, IP) or an Ethernet (Eth, ethernet) protocol. In another example of the AggN, the AggN includes an OTN, where the OTN may be separately connected to the OTN edge device and the AggN edge device, and the OTN edge device and the OTN may transmit a private line service of the terminal device.

The CN may be used for data storage and service support. For example, the AggN edge device may access the core network via a core provider edge (provider edge, PE) device, to support transmission of data of the core network. Alternatively, the AggN edge device may access a cloud/local data center via a data center network element, to support transmission of data of the cloud/local data center.

The foregoing domains are managed by respective controllers. To be specific, in FIG. 1, a CPN controller may be configured to manage the CPN, an AN controller may be configured to manage the AN, an AggN controller may be configured to manage the AggN, and a CN controller may be configured to manage the CN. In this application, management of a domain by a controller includes but is not limited to management of a network device in the domain.

The AN controller is used as an example. The AN controller may be configured to manage an access device. The AN controller may communicate with the access device via the OLT or the like. The AN controller is, for example, an optical network management module or an optical network management system (network cloud engine-fiber access network, NCE-FAN). In addition, it may also be considered that the AN controller may be configured to manage a device in the CPN, for example, the E-ONU, the P-ONU, the RG, the WG, the CE, or the IE.

In some implementations other than the examples in FIG. 1, it may also be considered that the ONU and the CPE belong to the CPN. In this case, the ONU and the CPE may still be managed by the AN controller, or the ONU and the CPE may be managed by the CPN controller or another management device. This is not specifically limited in this application.

In addition, as shown in FIG. 1, an end-to-end orchestration and management device may be configured to manage the controller. The end-to-end orchestration and management device is, for example, a network management system or a network server.

For ease of description in this application, a device configured to implement a network access function is referred to as an access device (or an access point (access point, AP)), and the terminal device may access a network via the access device. The access device may be the E-ONU, the P-ONU, the RG, the WG, the CE, or the IE in FIG. 1, or may be another device that is not shown in FIG. 1 and is configured to implement a wireless network access function, or may be a device that is configured to implement a wireless network access function in a scenario other than a scenario of the networking architecture of the optical network. This is not limited in this application. In some scenarios, the terminal device may alternatively be connected to the ONU or the CPE, and the access device may alternatively be the ONU or the CPE.

The following uses an example in which the access device is an AP for description. The AP in the following may be replaced with another name like the access device, or may be replaced with a device name like the ONU, the CPE, the RG, the WG, the CE, or the IE.

In this application, the terminal device may be a device that accesses a Wi-Fi network. For example, the terminal device may also be referred to as user equipment (user equipment, UE). The terminal device is a device having a wireless transceiver function, and the terminal device may perform voice and/or data exchange via the Wi-Fi network. The terminal device may be deployed on the land, including an indoor device, an outdoor device, a handheld device, or a vehicle-mounted device; or may be deployed on a water surface (for example, on a ship); or the terminal device may be deployed in the air (for example, on an airplane, a balloon, or a satellite). The terminal device may be a mobile phone (mobile phone), a tablet computer (pad), a computer with a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device may include, for example, a wireless terminal device, a mobile terminal device, a terminal device in device-to-device (device-to-device, D2D) communication, a vehicle-to-everything (vehicle-to-everything, V2X) terminal device, a terminal device in machine-to-machine/machine-type communication (machine-to-machine/machine-type communication, M2M/MTC), an internet-of-things (internet-of-things, IoT) terminal device, a subscriber unit (subscriber unit), a station (station, STA), a subscriber station (subscriber station), a mobile station (mobile station), a remote station (remote station), a remote terminal (remote terminal), a CPE, fixed wireless access (fixed wireless access, FWA), an access terminal (access terminal), a user terminal (user terminal), a user agent (user agent), or user equipment (user equipment). For example, the terminal device may include a mobile phone (or referred to as a "cellular" phone), a computer including a mobile terminal device, or a portable, pocket-sized, handheld, or computer-embedded mobile apparatus, for example, a device like a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability, for example, includes an information sensing device like a barcode, radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a general term for wearable devices, such as glasses, gloves, a watch, clothing, and shoes, that are developed through smart design of daily wear by using a wearable technology. The wearable device is a portable device that can be directly worn on a body or integrated into clothes or accessories of a user. The wearable device is a hardware device, and also implements a powerful function through software support, data exchange, and cloud interaction. In a broad sense, the wearable intelligent device includes a full-featured and large-sized device, for example, a smart watch or smart glasses, that can implement complete or partial functions without depending on a smartphone, and a device, for example, various smart bands, smart helmets, or smart jewelry used for vital sign monitoring, that is dedicated to only one type of application function and needs to be used in cooperation with another device like the smartphone.

However, if the terminals described above are located on a vehicle (for example, placed in the vehicle or installed in the vehicle), the terminals may be considered as vehicle-mounted terminal devices. For example, the vehicle-mounted terminal devices are also referred to as on-board units (on-board units, OBUs).

Currently, AP handover (or roaming, or roaming handover) may be performed on the terminal device for some reasons. An AP that provides a service for the terminal device before the handover may be referred to as a source AP or a serving AP, and an AP that is selected in the handover process and provides a service for the terminal device after the handover may be referred to as a target AP or an AP for handover.

In a diagram of a handover procedure, the source AP periodically detects a received signal strength indication (received signal strength indication, RSSI) of the terminal device. When it is found that a low-RSSI event occurs, the source AP sends, to a gateway (for example, an AP), a report on the low-RSSI event or an indication of the low-RSSI event, to indicate that the low-RSSI event occurs. The low-RSSI event may mean that an RSSI of a signal that is of the source AP and received by the terminal device is lower than or equal to a threshold corresponding to the low-RSSI event. In this case, it indicates that a signal of the terminal device is poor. Optionally, after receiving a report on a low-RSSI event of a user, the gateway sends information about one or more APs to the source AP. The source AP sends a beacon request (beacon request) to the terminal device, and then the terminal device performs detection on the one or more APs. The terminal device obtains RSSIs of signals sent by the one or more APs, and sends a detection result to the source AP for parsing, for example, comparing values of RSSIs that are of the one or more APs and received by the terminal device. The source AP may report a parsing result to the gateway, and the gateway makes a roaming decision based on the parsing result, that is, selects the target AP. The gateway may further take load of the one or more APs into consideration, and select a target AP.

After making the roaming decision, the gateway sends a user migration-out request to the source AP, and the terminal device performs business support system (business support system, BSS) handover. After receiving a BSS handover response, the source AP sends a user migration-out completion notification to the gateway, and then the terminal device performs management authentication on the target AP.

Currently, the target AP is selected mainly based on a signal strength of an AP received by the terminal device when performing signal detection, and accuracy in selecting the target AP needs to be improved.

For example, because a location of the terminal device may change, the terminal device may not always remain at a location at which the terminal device performs signal detection. Therefore, a result of signal detection performed based on the location may not be applicable to another location. If an AP is selected only based on the result of signal detection performed based on the location, the selected target AP may not meet a network performance requirement of the terminal device after movement, causing degradation of user experience.

To improve the accuracy in selecting the target AP, and improve service experience of the user in the Wi-Fi network, this application provides a communication method and apparatus.

The method may be performed by a first communication apparatus and a second communication apparatus. The first communication apparatus may be a first management device or a component like a module or a chip in the first management device. The first management device may be configured to manage an AP. For example, the first management device may be an AN controller (referred to as a first AN controller below) configured to manage the source AP. In addition, the first communication apparatus may be an orchestration device or a component like a module or a chip in the orchestration device. The orchestration device may be connected to a plurality of AN controllers. For example, the orchestration device is configured to manage the AN controllers. For example, the orchestration device may be an end-to-end orchestration and management device. The following uses an example in which the first management device is the first AN controller or the first communication apparatus is the orchestration device for description.

The second communication apparatus may be the source AP of the terminal device or a component like a module or a chip in the source AP. The following uses an example in which the second communication apparatus is the source AP for description.

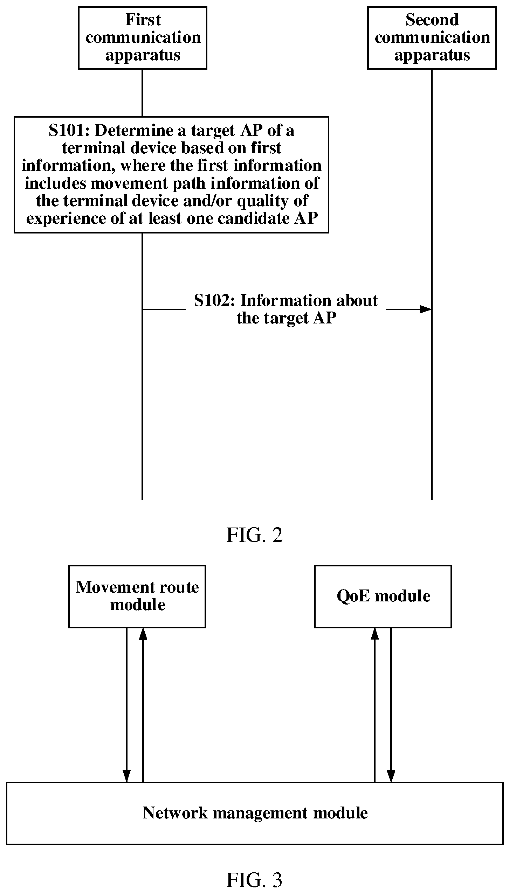

As shown in FIG. 2, for example, execution bodies are the first communication apparatus and the second communication apparatus. The communication method provided in this embodiment of this application may include the following steps.

S101: The first communication apparatus determines a target AP of a terminal device based on first information.

The first information may include movement path information of the terminal device and/or quality of experience (quality of experience, QoE) of at least one candidate AP.

The following separately describes the movement path information of the terminal device and the quality of experience of the at least one candidate AP.

### (1) Movement path information of the terminal device

The movement path information may indicate a movement trajectory of the terminal device. For example, the movement path information includes time and location information of the terminal device at the time. The location information may include geographical coordinates (for example, longitude and latitude) or area information (for example, an identifier of a cell or an identifier of a tracking area). The time may be specifically a moment, or may be a time period. This is not limited.

Specifically, the movement trajectory of the terminal device may be a future movement trajectory of the terminal device. For example, the movement path information may indicate a location of the terminal device in a future period of time.

In an example, the movement path information may include one or more key-value pairs <time, location>, and any key-value pair may indicate a location of the terminal device at a future moment.

### (2) Quality of experience of the at least one candidate AP

In this application, the at least one candidate AP may be at least one candidate AP for the target AP. In other words, the target AP may be determined from the at least one candidate AP. The at least one candidate AP may be one or more APs that are defined or configured in advance, or may be configured by a device, for example, an end-to-end orchestration and management device or an AN controller, or a management system.

An identifier of the at least one candidate AP may be determined based on an identifier of the terminal device. For example, different candidate APs may be defined or configured for different areas. Therefore, for terminal devices in different areas, the target AP may be determined from different sets of candidate APs. The identifier of the terminal device may represent or may be used to determine an area to which the terminal device belongs. Therefore, the at least one candidate AP may be determined based on the identifier of the terminal device, or the area in which the terminal device is located may be determined based on the identifier of the terminal device, and then the at least one candidate AP is determined based on information such as an area identifier. This is not specifically limited in this application.

The quality of experience of the at least one candidate AP may indicate at least one of throughput, a delay, or a handover delay of the at least one candidate AP at at least one location. The at least one location may be within a signal coverage range of the at least one candidate AP. For example, the quality of experience of the at least one candidate AP includes at least one key-value pair <location, at least one of throughput, a delay, or a handover delay>, where each key-value pair indicates at least one of throughput, a delay, or a handover delay at one location.

It may be understood that, the quality of experience of the at least one candidate AP may further include another parameter that is not described in this application and affects service experience of a user. This is not limited in this application.

The following describes a manner of determining the movement path information of the terminal device and the quality of experience of the at least one candidate AP. Details not described herein due to a limitation on a length of this specification.

S102: The first communication apparatus sends information about the target AP to the second communication apparatus.

The information about the target AP may identify the target AP, for example, may be an identifier, a name, or the like of the target AP. In this application, an identifier of an AP may be one or more of a BSS ID of the AP, a media access control (media access control, MAC) address of the AP, channel information, and the like. This is not specifically limited in this application.

Correspondingly, the second communication apparatus may obtain the information about the target AP, and perform roaming handover of the terminal.

In a possible embodiment, the first communication apparatus may perform S101 based on a request of the second communication apparatus. For example, before performing S101, the first communication apparatus may receive a handover request or a handover indication from the second communication apparatus. The handover request or the handover indication may include the identifier of the terminal device. The handover request or the handover indication may include a report on a low-RSSI event, and the report on the low-RSSI event may indicate that an RSSI of a signal that is of the source AP and received by the terminal device is lower than or equal to an RSSI threshold. The threshold may be pre-configured or predefined. This is not specifically limited.

In this application, the identifier of the terminal device may include a MAC address of the terminal device. The identifier of the terminal device may alternatively be a network identifier like a subscription permanent identifier (subscription permanent identifier, SUPI) of the terminal device. This is not specifically limited in this application.

Based on the procedure shown in FIG. 2, the target AP may be properly selected based on the movement path information of the terminal device and/or the quality of experience of the at least one candidate AP, to improve accuracy in selecting the target AP and improve service quality of the terminal device.

Because a location of the terminal device may be predicted based on the movement path information of the terminal device, for target AP selection, an AP whose location is close to the movement trajectory of the terminal device may be selected as the target AP, to improve the service quality of the terminal device, and avoid another turn of handover caused by an undesirable selected target AP. In addition, because the quality of experience affects the service quality of the terminal device, and quality of experience of a same AP at different locations may be different, target AP selection may be performed based on quality of experience of the target AP at at least one location. That is, an AP with better quality of experience at at least one location is selected as the target AP, to improve the service quality of the terminal device. In addition, if the target AP is selected based on the movement path information of the terminal device and the quality of experience of the at least one candidate AP, a future location of the terminal device may be considered, and an AP with better quality of experience is selected, based on quality of experience of the at least one candidate AP at the location (or another location near the location), as the target AP, so that the target AP can be selected more properly, and the service quality of the terminal device can be improved.

Optionally, communication between the first communication apparatus and the second communication apparatus may be performed via an OLT. For example, the first communication apparatus is the first AN controller, and the second communication apparatus is the source AP. Before S101, the source AP may send a handover request of the terminal device to the first AN controller via the OLT. Optionally, the OLT may receive, through an interface or a channel between the source AP and the OLT, the handover request reported by the source AP, and the OLT may further provide information about the source AP, for example, an identifier of the source AP, for the first AN controller. For example, the OLT adds the information about the source AP to the handover request, or the OLT uses the handover request and the information about the source AP as a new message and sends the new message to the first AN controller. The information about the source AP may indicate the source AP that sends the handover request. For example, the information about the source AP includes a BSS ID of the source AP, a MAC address of the source AP, or channel information.

In addition, in S102, the first AN controller may send the information about the target AP to the source AP via the OLT. Optionally, the first AN controller may further send the information about the source AP to the OLT, and the OLT may send, based on the information about the source AP, the information about the target AP to the source AP.

The following describes a manner in which the first communication apparatus obtains the movement path information of the terminal device.

In this application, the movement path information of the terminal device may be determined based on the identifier of the terminal device.

In a possible embodiment, the first communication apparatus may obtain, based on the identifier of the terminal device, an RSSI of a signal that is sent by at least one AP and received by the terminal device. Further, the first communication apparatus may determine the location information of the terminal device based on the RSSI, and predict a path of the terminal device based on the location information of the terminal device, to obtain the movement path information of the terminal device. The at least one AP may include the at least one candidate AP, or the at least one AP may be an AP other than the at least one candidate AP. This is not specifically limited.

In an example, the first communication apparatus may obtain RSSIs of signals that are sent by at least three APs and received by the terminal device, calculate a location of the terminal device based on the at least three RSSIs, and perform location prediction, to determine the movement path information of the terminal device. A manner of calculating the location of the terminal device based on the RSSIs does not belong to the protection content of this application, and may be implemented with reference to a conventional technology.

It may be understood that, if the first communication apparatus is the first management device, for example, the first AN controller corresponding to the source AP, the first management device may provide the identifier of the terminal device to the source AP, and receive the RSSI, sent by the source AP, of the signal that is sent by the at least one AP and received by the terminal device. Before S101, the first management device may send, to the source AP, the identifier of the terminal device, which is used for requesting the source AP to provide the RSSI of the signal that is of the at least one AP and received by the terminal device. For example, the first management device may trigger the source AP to send a detection request to the terminal device, to request the terminal device to detect the signal of the at least one AP. Correspondingly, the terminal device may send, to the source AP, the RSSI of the signal that is of the at least one AP and received by the terminal device, and the source AP may send, to the first management device, the RSSI of the signal that is of the at least one AP and received by the terminal device.

If the first communication apparatus is the end-to-end orchestration and management device, the end-to-end orchestration and management device may obtain, from the first AN controller, the RSSI of the signal that is sent by the at least one AP and received by the terminal device. The first AN controller corresponds to the source AP of the terminal device.

For example, the end-to-end orchestration and management device may send the identifier of the terminal device to the first AN controller, and the AN controller may trigger, based on the identifier of the terminal device, one or more APs managed by the AN controller to send a detection signal. The at least one AP may include the source AP and/or the at least one candidate AP of the terminal device, and/or may include at least one AP other than the source AP and the at least one candidate AP. Correspondingly, the terminal device may detect a signal of the one or more APs, and may send, to the source AP, the RSSI of the signal that is of the at least one AP and received by the terminal device. The source AP may send, to the AN controller, the RSSI of the signal that is of the at least one AP and received by the terminal device.

It may be understood that, if the first communication apparatus has obtained the movement path information of the terminal device before S101, in S101, based on the identifier of the terminal device, the first communication apparatus may query for and obtain the movement path information of the terminal device.

The following describes a manner in which the first communication apparatus obtains the quality of experience of the at least one candidate AP.

In this application, the quality of experience of the at least one candidate AP may be determined based on the identifier of the at least one candidate AP. The quality of experience of the at least one candidate AP may indicate at least one of throughput, a delay, or handover time when the terminal device is at a specific distance from the at least one candidate AP, for example, indicate at least one of throughput, a delay, or handover time of the at least one candidate AP when the terminal device is at a location.

In a possible embodiment, the quality of experience of the at least one candidate AP may be related to a performance parameter of the at least one candidate AP. The performance parameter of the at least one candidate AP may be understood as an inherent parameter of the at least one candidate AP. In other words, the performance parameter is unrelated to a distance between the terminal device and the at least one candidate AP. For example, the performance parameter of the at least one candidate AP includes at least one of throughput, a delay, or handover time. The performance parameter of the at least one candidate AP herein may alternatively be at least one of a real-time throughput, a real-time delay, or real-time handover time. The performance parameter of the at least one candidate AP may be used to determine the quality of experience of the at least one candidate AP, that is, used to determine at least one of throughput, a delay, or handover time at a specific distance from the at least one candidate AP. The throughput is used as an example. It may be understood that the throughput performance parameter of the at least one candidate AP may be used to determine throughput of the at least one candidate AP at one or more locations. For example, the throughput parameter of the at least one candidate AP is 500 bits per second (bits per second, bps), and throughput is only 400 bps at a location 50 meters away from the at least one candidate AP.

In this application, the quality of experience of the at least one candidate AP may include a location (or location information) and at least one of throughput, a delay, or handover time that corresponds to the location. The throughput is used as an example. The quality of experience of the at least one candidate AP may include a key-value pair <location, throughput>. In the foregoing example of the throughput of the at least one candidate AP, the quality of experience of the at least one candidate AP may include the key-value pair <location, throughput>, where the location may indicate information about the location 50 meters away from the at least one candidate AP, and the throughput may indicate that the throughput is 400 bps.

It may be understood that, if the first communication apparatus is the first management device, for example, the AN controller, the first management device may send a quality of experience request to the at least one candidate AP, to request at least one of the throughput, the delay, or the handover time of the at least one candidate AP, and determine the quality of experience of the at least one candidate AP based on at least one of the throughput, the delay, or the handover time of the at least one candidate AP. In this case, all candidate APs may be managed by the first management device. The first management device is, for example, the first AN controller corresponding to the source AP.

A manner of calculating the quality of experience of the at least one candidate AP based on at least one of the throughput, the delay, or the handover time of the at least one candidate AP does not belong to the protection content of this application, and may be implemented with reference to the conventional technology.

If the first communication apparatus is the end-to-end orchestration and management device, the end-to-end orchestration and management device may send a quality of experience request to at least one AN controller, where the quality of experience request may include the identifier of the at least one candidate AP, and the end-to-end orchestration and management device may further obtain the quality of experience of the at least one candidate AP from the at least one AN controller. The at least one AN controller may include the first AN controller corresponding to the source AP, and/or include an AN controller other than the first AN controller. Any AN controller may be configured to manage one or more candidate APs.

For example, if there are a plurality of candidate APs, and the plurality of candidate APs are all managed by a same AN controller (denoted as a second AN controller), the end-to-end orchestration and management device may request quality of experience of the candidate APs from the second AN controller. The second AN controller and the first AN controller may be a same AN controller, or may be different AN controllers.

For another example, if the candidate APs are managed by a plurality of AN controllers, the end-to-end orchestration and management device may respectively request quality of experience of the candidate APs from the plurality of AN controllers, and any one of the AN controllers may provide, for the end-to-end orchestration and management device, quality of experience of a candidate AP managed by the AN controller. The plurality of AN controllers may include the first AN controller and/or an AN controller other than the first AN controller.

In various embodiments of this application, the first communication apparatus may further determine the target AP based on required quality of experience of the terminal device. The required quality of experience of the terminal device includes, for example, at least one of throughput, a delay, or a handover delay that is required by the terminal device. For example, in S102, the first communication apparatus may determine the target AP based on the required quality of experience of the terminal device, with reference to the movement path information of the terminal device and/or the quality of experience of the at least one candidate AP.

For example, when determining the target AP based on the required quality of experience of the terminal device, the movement path information of the terminal device, and the quality of experience of the at least one candidate AP, the first communication apparatus may determine, based on the movement path information of the terminal device, a location of the terminal device within a future time period; determine, based on the location and the quality of experience of the at least one candidate AP, at least one of throughput, a delay, or a handover delay when the terminal device is at the location; and then compare at least one of the throughput, the delay, or the handover delay when the terminal device is at the location with at least one of the throughput, the delay, or the handover delay that is required by the terminal device, to determine, as the target AP, a candidate AP whose at least one of throughput, a delay, or a handover delay at the location satisfies at least one of the throughput, the delay, or the handover delay that is required by the terminal device.

The first communication apparatus may determine, based on quality of experience of one or more services of the terminal device, the required quality of experience of the terminal device.

If there are a plurality of services of the terminal device, the required quality of experience of the terminal device may be quality of experience of a service with best quality of experience (for example, at least one of throughput, a delay, or a handover delay is the best) in the plurality of services of the terminal device. Therefore, a requirement of the service with the best quality of experience may be preferably met. For example, when there are both an instant chat service and an online meeting service of the terminal device, better quality of experience is required for the online meeting service. In this case, at least one of throughput, a delay, or a handover delay of the online meeting service may be selected as the required quality of experience of the terminal device. Therefore, the selected target AP may meet at least one of the throughput, the delay, or the handover delay of the online meeting service.

In an embodiment of this application, a network management module may be deployed in the first communication apparatus, and is configured to perform S101. As shown in FIG. 3, an action of the first communication apparatus may be performed by the network management module. Optionally, an action of the first communication apparatus may alternatively be performed by a movement route module and/or a QoE module.

Based on the identifier of the terminal device, the movement route module may be configured to predict the movement trajectory of the terminal device, that is, determine the movement path information of the terminal device. The QoE module may be configured to calculate the quality of experience of the at least one candidate AP.

For example, the network management module is deployed in the first communication apparatus, and the movement route module and/or the QoE module may be deployed in the first communication apparatus, or may be deployed in an apparatus or a device other than the first communication apparatus. When the first communication apparatus is deployed with the movement route module and the QoE module, the first communication apparatus may predict the movement trajectory of the terminal device based on the identifier of the terminal device, to determine the movement path information of the terminal device, and the first communication apparatus may determine the quality of experience of the at least one candidate AP based on the identifier of the terminal device.

In addition, the movement route module and/or the QoE module may alternatively be deployed in a communication device other than the first communication apparatus. For example, when the movement route module is deployed in a device other than the first communication apparatus, the first communication apparatus may obtain the movement path information of the terminal device from the device. For another example, when the QoE module is deployed in a device other than the first communication apparatus, the first communication apparatus may obtain the quality of experience of the at least one candidate AP from the device.

In an example, when the network management module, the movement route module, and the QoE module are used for implementation, a manner of determining the target AP may include the following steps.

1a: After receiving handover information (for example, a handover request or a handover indication) of the terminal device, the network management module sends a movement route prediction request to the movement route module, to indicate or request the movement route module to predict a future movement route of the terminal device. The network management module may correspond to the source AP. For example, the network management module belongs to the first AN controller corresponding to the source AP, or the network management module belongs to an orchestration and management device, and the orchestration and management device corresponds to the first AN controller. The movement route prediction request may be used for requesting the movement path information of the terminal device. For example, the movement path information includes a key-value pair <time, location>.

In an example, the movement route prediction request may include the identifier of the terminal device and an RSSI of at least one AP of the terminal device. The RSSI of the at least one AP of the terminal device may be an RSSI of a signal that is of the at least one AP and received by the terminal device. The RSSI of the at least one AP of the terminal device may be from the source AP.

2a: After receiving the movement route prediction request, the movement route module obtains the RSSI of the at least one AP of the terminal device from the request, and calculates the movement path information of the terminal device based on the RSSI of the at least one AP of the terminal device, to predict a movement path. The predicted movement path is in a form of the key-value pair <time, location>.

3a: The movement route module sends the movement path information of the terminal device to the network management module.

1b: After receiving handover information (for example, a handover request or a handover indication) of the terminal device, the network management module sends, to the QoE module, a quality of experience request for the QoE of the at least one candidate AP. The quality of experience request may indicate or may be used for requesting the QoE module to determine the quality of experience of the at least one candidate AP.

Optionally, the quality of experience request may include the identifier of the at least one candidate AP. The network management module may determine the identifier of the at least one candidate AP based on the identifier of the terminal device.

2b: After receiving the quality of experience request for the QoE of the at least one candidate AP, the QoE module determines the quality of experience of the at least one candidate AP.

The quality of experience of the at least one candidate AP may include a key-value pair <location, at least one of throughput, a delay, or handover time>. The quality of experience of the at least one candidate AP may be determined by the QoE module based on at least one performance parameter of throughput, a delay, or handover time of the at least one candidate AP. For example, a key-value pair <location, throughput> may be determined by the QoE module based on the throughput performance parameter of the at least one candidate AP, a key-value pair <location, delay> may be determined by the QoE module based on the delay performance parameter of the at least one candidate AP, and a key-value pair <location, handover time> may be determined by the QoE module based on the handover time performance parameter of the at least one candidate AP.

3b: The QoE module sends the quality of experience of the at least one candidate AP to the network management module.

4: The network management module determines the target AP based on the movement path information of the terminal device and the quality of experience of the at least one candidate AP.

In the step 4, the network management module may determine, based on the movement path information of the terminal device, a location of the terminal device at future time, and select, based on at least one of throughput, a delay, or handover time at the location or a nearby location indicated by the quality of experience of the at least one candidate AP, a candidate AP with better performance in at least one of the throughput, the delay, or the handover time at the location or the nearby location as the target AP.

In the foregoing steps 1a and 1b, the handover information of the terminal device may be from the source AP of the terminal device. For example, the network management module may receive the handover request or the handover indication from the source AP.

In a possible implementation, the movement route prediction request and the quality of experience request may be combined into one request, and the combined request may include the identifier of the terminal device and the identifier of the at least one candidate AP. In other words, the combined request may be used for requesting the movement path information of the terminal device and the quality of experience of the at least one candidate AP.

It may be understood that, if the target AP is determined based on the movement path information of the terminal device, the steps 1a, 2a, 3a, and 4 may be performed. In this case, the step 4 may be replaced with: The network management module determines the target AP based on the movement path information of the terminal device. If the target AP is determined based on the quality of experience of the at least one candidate AP of the terminal device, the steps 1b, 2b, 3b, and 4 may be performed. In this case, the step 4 may be replaced with: The network management module determines the target AP based on the quality of experience of the at least one candidate AP.

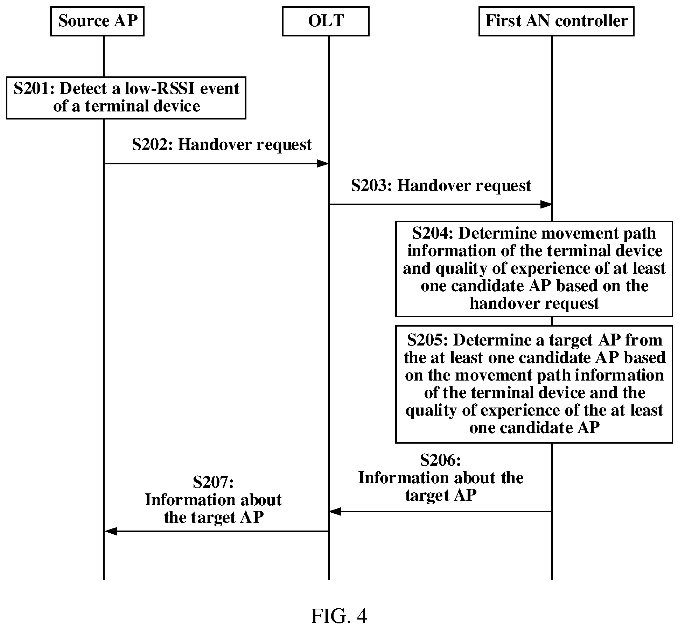

The following describes the communication method provided in this application with reference to the embodiments shown in FIG. 4 to FIG. 6. The following embodiments shown in FIG. 4 to FIG. 6 separately describe the procedure in FIG. 2 and the possible implementations related to FIG. 2. In some cases, the embodiments shown in FIG. 4 to FIG. 6 may be used as descriptions of the procedure in FIG. 2 and the foregoing implementations. In addition, the embodiments shown in FIG. 4 to FIG. 6 are example embodiments of the method provided in this application, and it should not be understood that the embodiments are procedures that need to be strictly followed in the method provided in this application.

In an embodiment of this application, when the first communication apparatus is the first AN controller, the first AN controller may determine the movement path information of the terminal device based on the identifier of the terminal device, determine the quality of experience of the at least one candidate AP based on the identifier of the at least one candidate AP, and then determine the target AP based on the movement path information of the terminal device and the quality of experience of the at least one candidate AP. In other words, in this embodiment, the network management module, the movement route module, and the QoE module shown in FIG. 3 may be deployed in the first AN controller. In this embodiment, the at least one candidate AP may be managed by the first AN controller, and the at least one candidate AP may include one or more APs. This is not specifically limited.

The following describes a manner of determining the target AP of the terminal device in this embodiment with reference to FIG. 4.

S201: The source AP of the terminal device detects a low-RSSI event of the terminal device.

For example, the source AP detects that an RSSI of a signal that is of the source AP and received by the terminal device is lower than or equal to a threshold corresponding to the low-RSSI event.

S202: The source AP sends the handover request of the terminal device to the OLT.

The handover request includes the identifier of the terminal device.

S203: The OLT sends the handover request of the terminal device to the first AN controller.

The handover request sent by the OLT to the first AN controller may further include the information about the source AP.

S204: The first AN controller determines the movement path information of the terminal device and the quality of experience of the at least one candidate AP based on the handover request.

The at least one candidate AP may be managed by the first AN controller.

In S204, for a manner of determining the movement path information of the terminal device and the quality of experience of the at least one candidate AP, refer to the descriptions in this application. For example, for a manner in which the first AN controller determines the movement path information of the terminal device, refer to the steps 1a to 3a. In other words, the network management module of the first AN controller may determine the movement path information of the terminal device via the movement route module. For another example, for a manner in which the first AN controller determines the quality of experience of the at least one candidate AP, refer to the steps 1b to 3b. In other words, the network management module of the first AN controller may determine the quality of experience of the at least one candidate AP via the QoE module.

S204 may be used as an example implementation of S101.

S205: The first AN controller determines the target AP from the at least one candidate AP based on the movement path information of the terminal device and the quality of experience of the at least one candidate AP.

For a manner of determining the target AP, refer to the descriptions in this application. For example, for a manner in which the first AN controller determines the movement path information of the terminal device, refer to the descriptions of the step 4. In other words, the first AN controller may determine the quality of experience of the at least one candidate AP via the network management module.

S205 may be used as an example implementation of S102.

S206: The first AN controller sends the information about the target AP to the OLT.

The information about the target AP may include the identifier of the target AP.

S207: The OLT sends the information about the target AP to the source AP.

Optionally, in S206, the first AN controller may send the information about the target AP and the information about the source AP to the OLT, and in S207, the OLT may send the information about the target AP to the source AP based on the information about the source AP.

It may be understood that S206 and S207 may be used as an example implementation of S102.

Based on S207, the source AP may perform terminal device handover based on the information about the target AP, and after the handover, the target AP may serve the terminal device. Because the target AP is determined based on the movement path information and the quality of experience of the at least one candidate AP, the target AP can be properly determined, thereby obtaining a better handover effect.

In another embodiment of this application, when the first communication apparatus is the first AN controller, the first AN controller may determine, from an end-to-end orchestration and management device, the movement path information of the terminal device based on the identifier of the terminal device, and determine the quality of experience of the at least one candidate AP based on the identifier of the at least one candidate AP. Then, the end-to-end orchestration and management device provides, for the first AN controller, the movement path information of the terminal device and the quality of experience of the at least one candidate AP, and the first AN controller determines the target AP based on the movement path information of the terminal device and the quality of experience of the at least one candidate AP. The end-to-end orchestration and management device in this embodiment may be configured to manage one or more AN controllers including the first AN controller. In this embodiment, the network management module shown in FIG. 3 may be deployed in the first AN controller, and the movement route module and the QoE module may be deployed in the end-to-end orchestration and management device.

In this embodiment, the at least one candidate AP may be managed by one or more AN controllers corresponding to the end-to-end orchestration and management device. In other words, it is not required that all candidate APs are managed by the first AN controller.

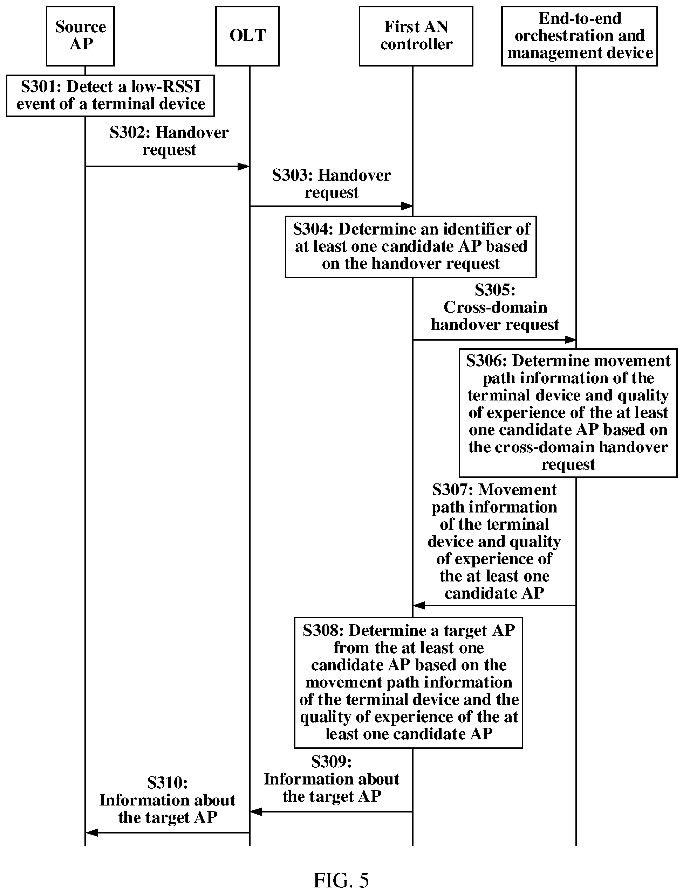

The following describes a manner of determining the target AP of the terminal device in this example with reference to FIG. 5.

S301: The source AP of the terminal device detects a low-RSSI event of the terminal device.

S302: The source AP sends the handover request of the terminal device to the OLT.

S303: The OLT sends the handover request of the terminal device to the first AN controller.

For S301 to S303, refer to S201 to S203.

S304: The first AN controller determines the identifier of the at least one candidate AP based on the handover request.

The first AN controller may determine the identifier of the at least one candidate AP based on the identifier of the terminal device in the handover request.

S305: The first AN controller sends, to the end-to-end orchestration and management device, a cross-domain handover request.

The cross-domain handover request may include the identifier of the terminal device and the identifier of the at least one candidate AP. The identifier of the terminal device may be used to determine a movement route of the terminal device, and the identifier of the at least one candidate AP may be used to determine the quality of experience of the at least one candidate AP.

S305 may be used as an example of the steps 1a and 1b. To be specific, the cross-domain handover request that is sent by the first AN controller in S305 may be used as the movement route prediction request in the step 1a, and may be used as the quality of experience request in the step 1b.

It may be understood that the foregoing cross-domain handover request may also be replaced with a request or a message having another name. This is not specifically limited in this application.

S306: The end-to-end orchestration and management device determines the movement path information of the terminal device and the quality of experience of the at least one candidate AP.

In S306, the end-to-end orchestration and management device may determine the movement path information of the terminal device based on the identifier of the terminal device. The end-to-end orchestration and management device may further determine the identifier of the at least one candidate AP based on the identifier of the terminal device, and determine the quality of experience based on the identifier of the at least one candidate AP. For a manner of determining the movement path information of the terminal device and the quality of experience of the at least one candidate AP, refer to the descriptions in this application. For example, for a manner in which the end-to-end orchestration and management device determines the movement path information of the terminal device, refer to the step 2a. In other words, the end-to-end orchestration and management device may determine the movement path information of the terminal device via the movement route module. For another example, for a manner in which the end-to-end orchestration and management device determines the quality of experience of the at least one candidate AP, refer to the step 2b. In other words, the end-to-end orchestration and management device may determine the quality of experience of the at least one candidate AP via the QoE module.

In a possible example, before S306, the end-to-end orchestration and management device may send the identifier of the terminal device to the first AN controller, to request or indicate the first AN controller to send, to the end-to-end orchestration and management device, an RSSI of a signal that is of one or more APs and received by the terminal device, as shown in S306-1. After receiving the RSSI of the terminal device from the first AN controller (as shown in S306-2), in S306, the end-to-end orchestration and management device may further determine the movement path information of the terminal device based on the RSSI of the signal that is of the one or more APs and received by the terminal device.

In another possible example, before S306, the end-to-end orchestration and management device may further send the identifier of the at least one candidate AP to one or more AN controllers corresponding to the at least one candidate AP, to collect, from the one or more AN controllers, at least one performance parameter of the throughput, the delay, or the handover time of the at least one candidate AP, as shown in S306-3. The one or more AN controllers corresponding to the at least one candidate AP are one or more AN controllers configured to manage the at least one candidate AP. The one or more AN controllers corresponding to the at least one candidate AP may include a first AN controller and/or the second AN controller. The second AN controller may include one or more AN controllers other than the first AN controller.

For example, if the at least one candidate AP is a first candidate AP, and the first candidate AP is managed by the first AN controller, the one or more AN controllers corresponding to the at least one candidate AP are first AN controllers. If the at least one candidate AP is a second candidate AP, and the second candidate AP is managed by the second AN controller, the one or more AN controllers corresponding to the at least one candidate AP are second AN controllers. If the at least one candidate AP include a first candidate AP and a second candidate AP, the first candidate AP is managed by the first AN controller, and the second candidate AP is managed by the second AN controller, the one or more AN controllers corresponding to the at least one candidate AP are first AN controllers and second AN controllers.

In this example, after obtaining, from the one or more AN controllers, the at least one performance parameter of the throughput, the delay, or the handover time of the candidate AP (as shown in S306-4), in S306, the end-to-end orchestration and management device may determine the quality of experience of the at least one candidate AP based on the at least one performance parameter of the throughput, the delay, or the handover time of the at least one candidate AP.

S307: The end-to-end orchestration and management device sends the movement path information of the terminal device and the quality of experience of the at least one candidate AP to the first AN controller.

S307 may be used as an example of the steps 3a and 3b.

S308: The first AN controller determines the target AP from the at least one candidate AP based on the movement path information of the terminal device and the quality of experience of the at least one candidate AP.

S309: The first AN controller sends the information about the target AP to the OLT.

S310: The OLT sends the information about the target AP to the source AP.

For S308 to S310, refer to the descriptions of S205 to S207. Details are not described again.

It may be understood that S309 and S310 may be used as an example implementation of S102.

Based on S310, the source AP may perform terminal device handover based on the information about the target AP, and after the handover, the target AP may serve the terminal device. Because the target AP is determined based on the movement path information and the quality of experience of the at least one candidate AP, the target AP can be properly determined, thereby obtaining a better handover effect.

In another embodiment of this application, when the first communication apparatus is an end-to-end orchestration and management device, the end-to-end orchestration and management device may determine the movement path information of the terminal device based on the identifier of the terminal device, determine the quality of experience of the at least one candidate AP based on the identifier of the at least one candidate AP, and then determine the target AP based on the movement path information of the terminal device and the quality of experience of the at least one candidate AP. In other words, in this embodiment, the network management module, the movement route module, and the QoE module shown in FIG. 3 may be deployed in the end-to-end orchestration and management device. In this embodiment, the at least one candidate AP may be managed by one or more AN controllers, and the one or more AN controllers may include the first AN controller corresponding to the source AP.

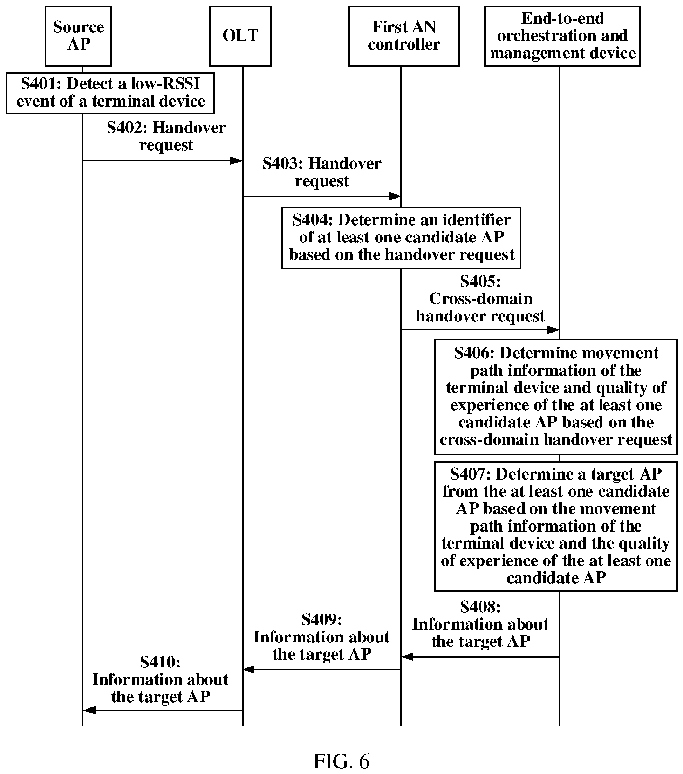

The following describes a manner of determining the target AP of the terminal device in this example with reference to FIG. 6.

S401: The source AP of the terminal device detects a low-RSSI event of the terminal device.

S402: The source AP sends the handover request of the terminal device to the OLT.

S403: The OLT sends the handover request of the terminal device to the first AN controller.

For S401 to S403, refer to S201 to S203.

S404: The first AN controller determines the identifier of the at least one candidate AP based on the handover request.

The first AN controller may determine the identifier of the at least one candidate AP based on the identifier of the terminal device in the handover request.

S405: The first AN controller sends, to the end-to-end orchestration and management device, a cross-domain handover request.

The cross-domain handover request may include the identifier of the terminal device and the identifier of the at least one candidate AP. The identifier of the terminal device may be used to determine a movement route of the terminal device, and the identifier of the at least one candidate AP may be used to determine the quality of experience of the at least one candidate AP.

It may be understood that the foregoing cross-domain handover request may also be replaced with a request or a message having another name. This is not specifically limited in this application.

S406: The end-to-end orchestration and management device determines the movement path information of the terminal device and the quality of experience of the at least one candidate AP.

S406 may be implemented with reference to S306.

S407: The end-to-end orchestration and management device determines the target AP from the at least one candidate AP based on the movement path information of the terminal device and the quality of experience of the at least one candidate AP.

For an implementation of S407, refer to S205. A difference lies in that the first AN controller is replaced by the end-to-end orchestration and management device as an execution body.

It may be understood that S204 may be used as an example implementation of S101.

In addition, S407 may be used as an example implementation of the step 4, that is, the target AP may be determined by a deployed network management module of the end-to-end orchestration and management device.

S408. The end-to-end orchestration and management device sends the information about the target AP to the first AN controller.

S409: The first AN controller sends the information about the target AP to the OLT.

S410: The OLT sends the information about the target AP to the source AP.

For S409 and S410, refer to the descriptions of S206 and S207. Details are not described again.

It may be understood that S409 and S410 may be used as an example implementation of S102.

Based on S410, the source AP may perform terminal device handover based on the information about the target AP, and after the handover, the target AP may serve the terminal device. Because the target AP is determined based on the movement path information and the quality of experience of the at least one candidate AP, the target AP can be properly determined, thereby obtaining a better handover effect.

The method provided in embodiments of this application are described above with reference to the accompanying drawings. The following describes apparatuses provided in embodiments of this application with reference to the accompanying drawings.

Based on a same technical concept, an embodiment of this application provides a communication apparatus. The apparatus includes a corresponding module, unit, or means (means) for performing the method steps in the foregoing method embodiments. The module, unit, or means may be implemented by software, or may be implemented by hardware, or may be implemented by hardware executing corresponding software.

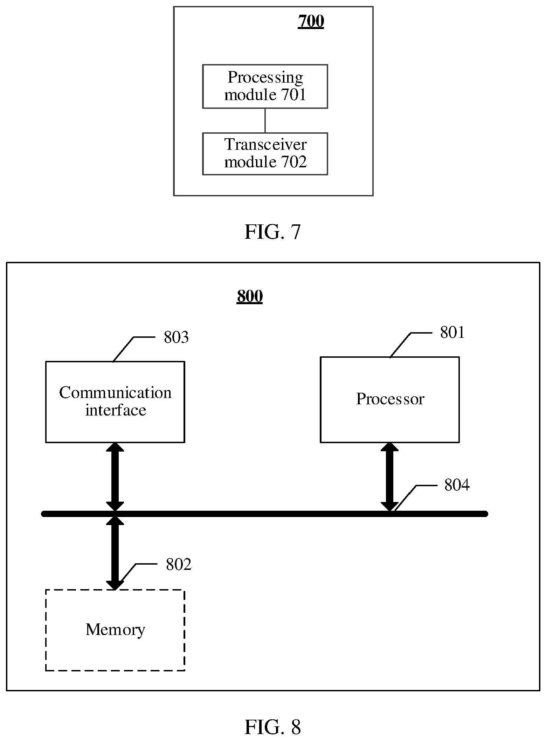

For example, refer to FIG. 7. The apparatus 700 may include a processing module 701 and a transceiver module 702.

Optionally, the transceiver module 702 may include a sending module and/or a receiving module. The sending module is configured to perform a sending operation in the foregoing method embodiments. The receiving module is configured to perform a receiving operation in the foregoing method embodiments.

It should be noted that the communication apparatus 700 may include the sending module and does not include the receiving module. Alternatively, the communication apparatus 700 may include the receiving module and does not include the sending module. This may specifically depend on whether the foregoing solution performed by the communication apparatus 700 includes a sending action and a receiving action.

The processing module 701 is configured to perform data processing. The transceiver module 702 may implement a corresponding communication function.

Optionally, the communication apparatus 700 may further include a storage module, and the storage module may be configured to store instructions and/or data. The processing module 701 may read the instructions and/or the data in the storage module, to cause the communication apparatus 700 to implement the foregoing method embodiments.

For example, the communication apparatus 700 may be the first communication apparatus or a component that can be configured in the first communication apparatus. For example, the first communication apparatus is a first AN controller (for example, the first AN controller in FIG. 4 or FIG. 5) or an end-to-end orchestration and management device (for example, the end-to-end orchestration and management device in FIG. 7). The processing module 701 is configured to perform the processing-related operations of the first communication apparatus in the foregoing method embodiments. The transceiver module 702 is configured to perform the receiving-related operations of the first communication apparatus in the foregoing method embodiments.

For example, when configured to implement an action of the first communication apparatus shown in FIG. 2, the processing module 701 may be configured to determine a target AP of a terminal device based on first information, and the transceiver module 702 may be configured to send information about the target AP. For another example, when configured to implement an action of the first AN controller shown in FIG. 4, the processing module 701 may be configured to perform S204 or S205, and the transceiver module 702 may be configured to perform S203 and S206. For another example, when configured to implement an action of the first AN controller shown in FIG. 5, the processing module 701 may be configured to perform S204 or S205, and the transceiver module 702 may be configured to perform S203 and S206. For another example, when configured to implement an action of the end-to-end orchestration and management device shown in FIG. 6, the processing module 701 may be configured to perform S406 or S407, and the transceiver module 702 may be configured to perform S405 and S408.

For example, when the first communication apparatus is the first AN controller, the communication apparatus 700 may be an end-to-end orchestration and management device or a component that can be configured in an end-to-end orchestration and management device. The processing module 701 is configured to perform the processing-related operations of the end-to-end orchestration and management device in the foregoing method embodiments. The transceiver module 702 is configured to perform the receiving-related operations of the end-to-end orchestration and management device in the foregoing method embodiments.

For example, when configured to implement an action of the end-to-end orchestration and management device shown in FIG. 5, the transceiver module 702 may be configured to perform S305 and S307. The processing module 701 may be configured to perform S306.

Alternatively, the communication apparatus 700 may be the second communication apparatus or a component that may be configured in the second communication apparatus. The processing module 701 is configured to perform the processing-related operations of the second communication apparatus in the foregoing method embodiments. The transceiver module 702 is configured to perform the receiving-related operations of the second communication apparatus in the foregoing method embodiments.

For example, when configured to implement an action of the second communication apparatus shown in FIG. 2, the transceiver module 702 is configured to receive information about the target AP.

It should be understood that all related content of the steps in the foregoing method embodiments may be cited in function descriptions of corresponding functional modules. Details are not described herein again.

The processing module 701 in the foregoing embodiments may be implemented by at least one processor or a processor-related circuit. The transceiver module 702 may be implemented by a transceiver or a transceiver-related circuit. The transceiver module 702 may also be referred to as a communication module or a communication interface.

The following describes a diagram of another structure of a communication apparatus according to an embodiment of this application. As shown in FIG. 8, an embodiment of this application further provides a communication apparatus 800, including:
at least one processor 801, and a communication interface 803 communicatively connected to the at least one processor 801. The at least one processor 801 executes instructions stored in a memory 802, to cause the apparatus to perform the method steps in the foregoing method embodiments through the communication interface 803.

Optionally, the memory 802 is located outside the apparatus 800.

Optionally, the apparatus 800 includes the memory 802. The memory 802 is connected to the at least one processor 801, and the memory 802 stores instructions that can be executed by the at least one processor 801. In FIG. 8, a dashed line is used for indicating that the memory 802 is optional for the apparatus 800.

The processor 801 and the memory 802 may be coupled through an interface circuit, or may be integrated together. This is not limited herein.

A specific connection medium between the processor 801, the memory 802, and the communication interface 803 is not limited in this embodiment of this application. In this embodiment of this application, in FIG. 8, the processor 801, the memory 802, and the communication interface 803 are connected through a bus 804. The bus is represented by a thick line in FIG. 8. Another connection manner of the components is merely an example for description, and is not intended for limitation. The bus may be classified into an address bus, a data bus, a control bus, and the like. For ease of representation, only one thick line is used to represent the bus in FIG. 8, but this does not mean that there is only one bus or only one type of bus.

When the communication apparatus 800 is a first communication apparatus, the first communication apparatus may include a processor, a memory, and a transceiver. The memory may store computer program code, and the transceiver includes a transmitter and a receiver.

The processor is mainly configured to: process a communication protocol and communication data, control the first communication apparatus, execute a software program, process data of the software program, and so on. The memory is mainly configured to store the software program and the data. The transmitter is configured to send a signal to another communication apparatus or device, and the receiver is configured to receive a signal from another communication apparatus or device.

When the communication apparatus 800 is a chip in the first communication apparatus, the chip may include a processor, a memory, and a transceiver. The transceiver may be an input/output circuit or a communication interface. The processor may be a processing module, a microprocessor, or an integrated circuit integrated on the chip. The sending operation performed by the first communication apparatus in the foregoing method embodiments may be understood as an output of the chip, and the receiving operation performed by the first communication apparatus in the foregoing method embodiments may be understood as an input of the chip.

When the communication apparatus 800 is an end-to-end orchestration and management device, the end-to-end orchestration and management device may include a processor, a memory, and a transceiver. The memory may store computer program code, and the transceiver includes a transmitter and a receiver.

The processor is mainly configured to: process a communication protocol and communication data, control the end-to-end orchestration and management device, execute a software program, process data of the software program, and so on. The memory is mainly configured to store the software program and the data. The transmitter is configured to send a signal to another communication apparatus or device, and the receiver is configured to receive a signal from another communication apparatus or device.

When the communication apparatus 800 is a chip in the end-to-end orchestration and management device, the chip may include a processor, a memory, and a transceiver. The transceiver may be an input/output circuit or a communication interface. The processor may be a processing module, a microprocessor, or an integrated circuit integrated on the chip. The sending operation of the end-to-end orchestration and management device in the foregoing method embodiments may be understood as an output of the chip, and the receiving operation of the end-to-end orchestration and management device in the foregoing method embodiments may be understood as an input of the chip.

When the communication apparatus 800 is a second communication apparatus, the second communication apparatus may include a processor, a memory, and a transceiver. The memory may store computer program code, and the transceiver includes a transmitter and a receiver.

The processor is mainly configured to: process a communication protocol and communication data, control the second communication apparatus, execute a software program, process data of the software program, and so on. The memory is mainly configured to store the software program and the data. The transmitter is configured to send a signal to another communication apparatus or device, and the receiver is configured to receive a signal from another communication apparatus or device.

When the communication apparatus 800 is a chip in the second communication apparatus, the chip may include a processor, a memory, and a transceiver. The transceiver may be an input/output circuit or a communication interface. The processor may be a processing module, a microprocessor, or an integrated circuit integrated on the chip. The sending operation performed by the second communication apparatus in the foregoing method embodiments may be understood as an output of the chip, and the receiving operation performed by the second communication apparatus in the foregoing method embodiments may be understood as an input of the chip.

It should be understood that the processor mentioned in embodiments of this application may be implemented by using hardware, or may be implemented by using software. When hardware is used for implementation, the processor may be a logic circuit, an integrated circuit, or the like. When software is used for implementation, the processor may be a general-purpose processor, and is implemented by reading software code stored in the memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be understood that the memory mentioned in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (Synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should be noted that the memories described in this specification are intended to include, but not limited to, these memories and any memory of another appropriate type.

Based on a same technical idea, an embodiment of this application further provides a computer-readable storage medium, including a program or instructions. When the program or the instructions are run on a computer, the method in the foregoing method embodiments is performed.

Based on a same technical idea, an embodiment of this application further provides a computer program product, including instructions. When the instructions are run on a computer, the method in the foregoing method embodiments is performed.

Based on a same technical idea, an embodiment of this application further provides a communication system. The communication system may include a first communication apparatus and a second communication apparatus. The first communication apparatus may be configured to implement the method implemented by the first communication apparatus in the foregoing method embodiments, and the second communication apparatus may be configured to implement the method implemented by the second communication apparatus in the foregoing method embodiments. For example, the first communication apparatus is configured to perform an action performed by the first communication apparatus in the procedure shown in FIG. 2, and the second communication apparatus is configured to perform an action performed by the second communication apparatus in the procedure shown in FIG. 2. For another example, the first communication apparatus is configured to perform an action performed by the first AN controller in the procedure shown in FIG. 4, and the second communication apparatus is configured to perform an action performed by the source AP in the procedure shown in FIG. 4.

Based on a same technical idea, an embodiment of this application further provides a communication system. The communication system may include an orchestration device and a first management device. The orchestration device may be configured to implement the method implemented by the orchestration device in the foregoing method embodiments, and the first management device may be configured to implement the method implemented by the first management device in the foregoing method embodiments. Optionally, the communication system may further include a second communication apparatus, and the second communication apparatus may be configured to implement the method implemented by the second communication apparatus in the foregoing method embodiments. For example, the orchestration device is configured to perform an action performed by the end-to-end orchestration and management device in the procedure shown in FIG. 5, the first management device is configured to perform an action performed by the first AN controller in the procedure shown in FIG. 5, and the second communication apparatus is configured to perform an action performed by the source AP in the procedure shown in FIG. 5. For another example, the orchestration device is configured to perform an action performed by the end-to-end orchestration and management device in the procedure shown in FIG. 6, the first management device is configured to perform an action performed by the first AN controller in the procedure shown in FIG. 6, and the second communication apparatus is configured to perform an action performed by the source AP in the procedure shown in FIG. 6.

A person skilled in the art should understand that embodiments of this application may be provided as a method, a system, or a computer program product. Therefore, this application may use a form of hardware-only embodiments, software-only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams according to the method, the device (system), and the computer program product according to this application. It should be understood that computer program instructions may be used to implement each procedure and/or each block in the flowcharts and/or the block diagrams and a combination of the procedures and/or the blocks in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may alternatively be stored in a computer-readable memory that can guide the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, to generate processing that is implemented by the computer. In this way, the instructions executed on the computer or the another programmable device provide steps for implementing a specific function in one or more procedures in the flowcharts and/or in one or more blocks in the block diagrams.

## Claims

1. A communication method, comprising:
determining a target access device of a terminal device based on first information, wherein the first information comprises movement path information of the terminal device and/or quality of experience of at least one candidate access device; and
sending information about the target access device to a source access device of the terminal device.

2. The method according to claim 1, wherein the method further comprises:
sending an identifier of the terminal device to an orchestration device; and
receiving the movement path information from the orchestration device.

3. The method according to claim 2, wherein the method is applied to a first management device, and the method further comprises:
receiving first signal strength information from the source access device, wherein the first signal strength information indicates downlink signal strength of a signal that is of one or more access devices and received by the terminal device; and
sending the first signal strength information to the orchestration device.

4. The method according to claim 3, wherein the method further comprises:
receiving a first request message from the orchestration device, wherein the first request message is used for requesting the first signal strength information, and the first request message comprises the identifier of the terminal device; and
the sending the first signal strength information to the orchestration device comprises:
sending the first signal strength information to the orchestration device based on the first request message.

5. The method according to any one of claims 1 to 4, wherein the method further comprises:
determining an identifier of the at least one candidate access device based on the identifier of the terminal device;
sending the identifier of the at least one candidate access device to the orchestration device; and
receiving the quality of experience of the at least one candidate access device from the orchestration device.

6. The method according to claim 5, wherein the method is applied to the first management device, the at least one candidate access device comprises a first candidate access device, the first candidate access device is managed by the first management device, and the method further comprises:
sending second information to the orchestration device, wherein the second information comprises at least one of throughput, a delay, or a handover delay of the first candidate access device, and the second information is used to determine the quality of experience of the at least one candidate access device.

7. The method according to claim 6, wherein the method further comprises:
receiving a second request message from the orchestration device, wherein the second request message is used for requesting the second information, and the second request message comprises the identifier of the terminal device and/or the identifier of the at least one candidate access device; and
the sending the second information to the orchestration device comprises:
sending the second information to the orchestration device based on the second request message.

8. The method according to any one of claims 2 to 7, wherein the method is applied to the first management device, and the at least one candidate access device comprises an access device managed by a second management device.

9. The method according to claim 1, further comprising:
determining the movement path information based on an identifier of the terminal device;
and/or
determining an identifier of the at least one candidate access device based on the identifier of the terminal device; and
determining the quality of experience of the at least one candidate access device based on the identifier of the at least one candidate access device.

10. The method according to claim 9, wherein the method is applied to a first management device, and the at least one candidate access device is managed by the first management device.

11. The method according to claim 9, wherein the method is applied to an orchestration device, and the determining the movement path information based on the identifier of the terminal device comprises:
sending a third request message to a first management device, wherein the third request message is used for requesting second signal strength information, the second signal strength information indicates downlink signal strength of a signal that is of one or more access devices and received by the terminal device, and the third request message comprises the identifier of the terminal device;
receiving the second signal strength information; and
determining the movement path information based on the second signal strength information.

12. The method according to claim 9, wherein the method is applied to an orchestration device, the at least one candidate access device comprises a first candidate access device, the first candidate access device is managed by a first management device, and the determining the quality of experience of the at least one candidate access device based on the identifier of the at least one candidate access device comprises:
sending a fourth request message to the first management device, wherein the fourth request message is used for requesting third information, the third information comprises at least one of throughput, a delay, or a handover delay of the first candidate access device, and the third information is used to determine the quality of experience of the at least one candidate access device;
receiving the third information; and
determining the quality of experience of the at least one candidate access device based on the third information.

13. The method according to any one of claims 1 to 12, wherein the quality of experience of the at least one candidate access device comprises location information and at least one of throughput, a delay, or a handover delay that is of the at least one candidate access device and corresponds to the location information.

14. The method according to any one of claims 1 to 13, wherein the method further comprises:
obtaining required quality of experience of the terminal device; and
the determining a target access device from the at least one candidate access device based on first information comprises:
determining, based on the required quality of experience of the terminal device, and the movement path information and/or the quality of experience of the at least one candidate access device, the target access device from the at least one candidate access device.

15. The method according to claim 14, wherein the required quality of experience of the terminal device is determined based on QoE of one or more services of the terminal device.

16. A communication method, comprising:
receiving an identifier of a terminal device from a first management device;
determining movement path information of the terminal device based on the identifier of the terminal device; and
sending the movement path information to the first management device, wherein the movement path information is used to determine a target access device of the terminal device.

17. The method according to claim 16, wherein the determining the movement path information of the terminal device based on the identifier of the terminal device comprises:
determining downlink signal strength of the terminal device based on the identifier of the terminal device; and
determining the movement path information based on the downlink signal strength of the terminal device.

18. The method according to claim 17, wherein the method further comprises:
receiving first signal strength information from the first management device, wherein the first signal strength information indicates downlink signal strength of a signal that is of one or more access devices and received by the terminal device, and the downlink signal strength of the terminal device comprises the first signal strength information.

19. The method according to claim 18, wherein the method further comprises:
sending a first request message to the first management device, wherein the first request message is used for requesting the first signal strength information, and the first request message comprises the identifier of the terminal device.

20. The method according to any one of claims 16 to 19, wherein at least one candidate access device comprises an access device managed by a second management device.

21. A communication method, comprising:
receiving an identifier of at least one candidate access device from a first management device;
determining quality of experience of the at least one candidate access device based on the identifier of the at least one candidate access device; and
sending the quality of experience of the at least one candidate access device to the first management device, wherein the quality of experience of the at least one candidate access device is used to determine a target access device of a terminal device.

22. The method according to claim 21, wherein the at least one candidate access device comprises a first candidate access device, the first candidate access device is managed by the first management device, and the method further comprises:
receiving second information from the first management device, wherein the second information comprises at least one of throughput, a delay, or a handover delay of the first candidate access device; and
determining the quality of experience of the at least one candidate access device based on the second information.

23. The method according to claim 22, wherein the method further comprises:
sending a second request message to the first management device, wherein the second request message is used for requesting the second information, and the second request message comprises an identifier of the terminal device and/or the identifier of the at least one candidate access device.

24. The method according to any one of claims 21 to 23, wherein the at least one candidate access device comprises an access device managed by a second management device.

25. The method according to any one of claims 21 to 24, wherein the quality of experience of the at least one candidate access device comprises location information and at least one of throughput, a delay, or a handover delay that is of the at least one candidate access device and corresponds to the location information.

26. A communication apparatus, comprising a unit or a module configured to perform the method according to any one of claims 1 to 15, comprising a unit or a module configured to perform the method according to any one of claims 16 to 20, or comprising a unit or a module configured to perform the method according to any one of claims 21 to 25.

27. A communication apparatus, comprising a processor, wherein the processor is configured to execute a computer program or instructions, to implement the method according to any one of claims 1 to 15, implement the method according to any one of claims 16 to 20, or implement the method according to any one of claims 21 to 25.

28. A computer-readable storage medium, wherein the storage medium stores a computer program or instructions, and when the computer program or the instructions are executed by a communication apparatus, the method according to any one of claims 1 to 15 is implemented, the method according to any one of claims 16 to 20 is implemented, or the method according to any one of claims 21 to 25 is implemented.

29. A computer program product, wherein when the computer program product is executed by a computer, the computer is caused to perform the method according to any one of claims 1 to 15, perform the method according to any one of claims 16 to 20, or perform the method according to any one of claims 21 to 25.
